# EUROPEAN PATENT APPLICATION

(11) **EP 4 790 623 A1**
(43) Date of publication of application: **12.08.2026**
(21) Application number: 26157037.8
(22) Date of filing: 06.02.2026
(51) Int. Cl.: G06Q 20/32, G06Q 20/34, G07F 7/08

(54) **CONTACTLESS PAYMENT SYSTEM FOR MOBILE COMPUTER USING NFC ANTENNA AND A DEDICATED SECOND DISPLAY**

(30) Priority: 06.02.2025 US 202519047583
(71) Applicant: Datalogic IP Tech S.r.l., 40012 Calderara di Reno (BO) (IT)
(72) Inventor: FORTINO, Dario, I-40128 Bologna (IT); LIPPARINI, Valerio, I-40011 Anzola dell'Emilia (BO) (IT)
(74) Representative: Porta & Consulenti Associati S.p.A.

(57) **Abstract**

A mobile electronic device includes a housing having a front side and a back side. A primary electronic display may be positioned on the front side of the housing and may display interactive graphical user interfaces with which a user controls operation of the mobile electronic device. The mobile electronic device may also include a secondary electronic display to display point-of-sale (POS) information to a customer to pay using a payment device that is enabled to perform wireless transactions. The secondary electronic display is positioned on the back side of the housing to enable the customer to view the secondary electronic display when performing a wireless transaction. The mobile electronic device may also include an antenna to communicate wireless signals with the payment device when performing the wireless transaction. A method of mobile payment is also disclosed.

## Description

### TECHNICAL FIELD

The present disclosure relates generally to displays and antennas for mobile devices, and more particularly, to a mobile electronic device with an antenna for receiving payments via payment cards and an electronic display disposed on a rear side of the mobile electronic device for customer viewing and optional interaction thereof.

### BACKGROUND

Mobile devices, such as smartphones and/or other mobile electronic devices) can be configured to receive and accept payments by payment cards (e.g., credit card, debit card, prepaid card, etc.) or any other type or shape of payment device using near-field communication (NFC) and/or other wireless technologies. For example, a payor may place a credit card or another mobile device containing a payment device proximate to or in contact with a receiving mobile device of a user (e.g., retailer, individual seller, etc.). The receiving mobile device accepts and processes the necessary information related to the payment. Existing mobile devices are configured for a payment device to be placed proximate a rear housing, which obscures viewing of information displayed on an electronic display on a front side of the mobile device regarding the payment of the payment device. As a result of the payment device having to be positioned behind the mobile device, users of both the payment device and mobile device tend to find the method of payment impractical or inconvenient as both are obscured from opposing sides of the mobile device. As such, there is a need for a mobile device enabled to accept payments using NFC technology in a more practical and convenient manner.

### BRIEF SUMMARY

To overcome the problem of receiving payments by existing mobile electronic devices (e.g., mobile devices) with near-field communication (NFC) configurations via a housing of the mobile electronic devices, one or more antennas along with supporting hardware may be configured to enable an antenna pattern with NFC signals to exit via a back side of the housing of mobile electronic devices for reading a payment device, such as a payment card, optionally proximate to a secondary electronic display positioned on the back side of the housing. The configuration of the mobile electronic device that includes a primary electronic display on a front side of the housing and the secondary electronic display to enable a payor using a payment card or device to view payment information from the back side of the housing when using a payment device. The antenna for wirelessly interacting with the payment device may be proximate to the secondary electronic display to enable an easier and interactive transaction, thereby saving time and providing a better user experience. As a result of being able to read a payment device via the back side of the housing of the mobile electronic device and providing the secondary electronic display (e.g., an electronic display with a screen, such as a touch screen), a user interface may be designed for display on the electronic display to further improve the user experience. For example, the secondary electronic display may be used to display transaction amount, support user interaction (e.g., add tip, etc.), and so on.

One embodiment of a mobile electronic device may include a housing having a front side and a back side. A primary electronic display may be positioned on the front side of the housing and may display interactive graphical user interfaces with which a user controls operation of the mobile electronic device. The mobile electronic device may also include a secondary electronic display to display point-of-sale (POS) information to a customer to pay using a payment device that is enabled to perform wireless transactions. The secondary electronic display is positioned on the back side of the housing to enable the customer to view the secondary electronic display when performing a wireless transaction. The mobile electronic device may also include an antenna to communicate wireless signals with the payment device when performing the wireless transaction. The antenna may be oriented to communicate the wireless signals via the back side of the housing, and may electromagnetically communicate with the payment device when positioned proximate the antenna. At least one processor may be in communication with the primary electronic display, secondary electronic display, and antenna. The processor may cause the secondary electronic display to display the POS information in response to a customer payment process being initiated and receive payment signals including payment information via the antenna from the payment device. The processor also may perform a financial transaction with a remote payment system in response to receiving the payment information and display status information of the financial transaction on the secondary electronic display.

Preferably, the mobile electronic device further comprises an illumination device positioned on the back side of the housing, wherein the at least one processor is further configured to turn ON the illumination device in response to the customer payment process being initiated.

Preferably, the at least one processor is further configured to cause the illumination device to flash in response to the customer payment process being initiated.

Preferably, the back side of the housing includes an indicia indicating to the customer a location at which the wireless signals of the antenna are oriented for the customer to position the payment device.

Preferably, the antenna is oriented radially about the secondary electronic display.

In an embodiment, the secondary electronic display is limited to displaying monochromatic text.

Preferably, the secondary electronic display is a touchscreen configured for interactivity by a customer in performing the transaction.

Preferably, the mobile electronic device is configured to be placed into a cradle for stationary use and the at least one processor is further configured to, in response to communicative coupling of the mobile electronic device and an electronic component of the cradle, automatically initiate the customer payment process.

Preferably, the cradle includes a power connection configured to supply power to the mobile electronic device.

Preferably, the wireless signals include near-field communication (NFC) signals.

Preferably, the payment device includes one or more of a payment card, a near-field communication (NFC) component, a mobile wallet, and a key fob.

Preferably, the at least one processor is further configured to cause the primary electronic display to display the POS information in response to the customer payment process being initiated; and display the status information of the financial transaction on the primary electronic display.

One embodiment of a method of mobile payment processing may include initiating a customer payment process by a mobile electronic device in response to receiving a request to initiate a customer payment process via a primary electronic display positioned on a front side of the mobile electronic device. The method may include causing a secondary electronic display positioned on a back side of the mobile electronic device to display point-of-sale (POS) information during the customer payment process. In response to a payment device being communicatively coupled to an antenna oriented on the back side of the mobile electronic device, payment signals including payment information may be received via the antenna from the payment device. A financial transaction may be performed with a remote payment system in response to receiving the payment information and status information of the financial transaction may be displayed on the secondary electronic display during the customer payment process.

In an embodiment, the method further comprises turning ON an illumination device in response to the customer payment process being initiated.

In a further embodiment, the method further comprises causing an illumination device to flash in response to the customer payment process being initiated.

Preferably, the method further comprises receiving one or more inputs from a customer via the secondary electronic display.

Preferably, the method further comprises automatically initiating the customer payment process in response to communicatively coupling the mobile electronic device with an electronic component of a cradle.

Preferably, the method further comprises simultaneously displaying the status information of the financial transaction on the primary electronic display during the customer payment process.

Preferably, causing a secondary electronic display positioned on a back side of the mobile electronic device to display point-of-sale (POS) information during the customer payment process includes one or more of (i) causing the secondary electronic display to display monochromatic text and (ii) causing the secondary electronic display to enable a touchscreen configured for interactivity during the customer payment process.

A method of manufacturing a mobile electronic device may include providing a housing including a front side and a back side of the mobile electronic device. The method may include configuring a primary electronic display to be viewable from the front side of the housing, configuring a secondary electronic display to be viewable from the back side of the housing, and orienting an antenna to communicate wireless signals via the back side of the housing to perform a wireless financial transaction.

### BRIEF DESCRIPTION OF THE DRAWINGS

Illustrative embodiments of the present invention are described in detail below with reference to the attached drawing figures, which are incorporated by reference herein and wherein:
**FIG. 1** is an illustration of an illustrative mobile device receiving a payment from a payment device configured to communicate NFC or other wireless signals;
**FIG. 2** is a rear view of an illustrative mobile device inclusive of one embodiment of a secondary electronic display on a back side of the mobile device;
**FIG. 3** is a rear view of an illustrative mobile device inclusive of another embodiment of a secondary electronic display and NFC antenna proximate the secondary electronic display;
**FIG. 4** is a rear view of an illustrative mobile device inclusive of an embodiment of a secondary electronic display;
**FIGS. 5A-5C** are rear views of an illustrative mobile device displaying illustrative user interfaces in performing a transaction;
**FIG. 6** is an illustration of a block diagram of an illustrative mobile device including an antenna for performing a wireless transaction with a payment device and a secondary electronic display on a back side of the mobile device, according to an embodiment of the disclosure;
**FIG. 7** is a flow chart illustrating an illustrative process for mobile payment processing, according to an embodiment of the disclosure; and
**FIG. 8** is a flow chart illustrating an illustrative process for manufacturing a mobile device inclusive of an antenna to perform wireless transactions with a customer and secondary electronic display.

### DETAILED DESCRIPTION

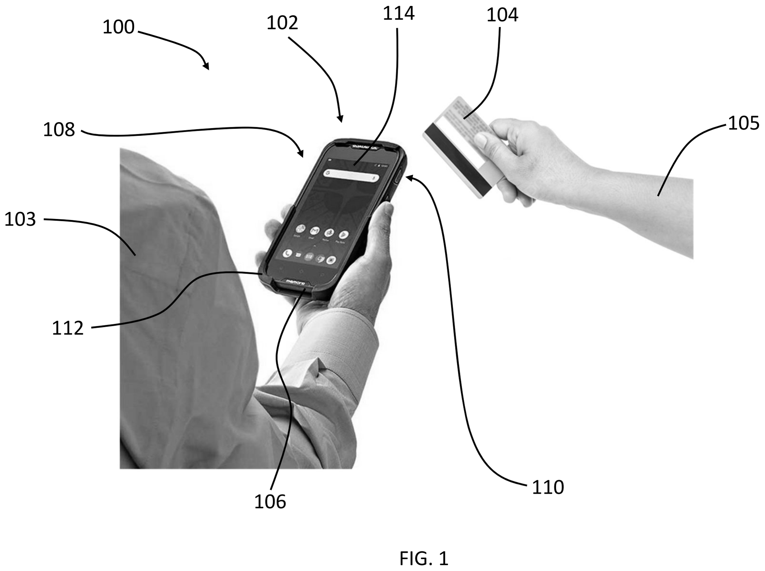

With regard to **FIG. 1****,** an illustration of an illustrative scene **100** in which a mobile electronic device or mobile device **102** (e.g., a cell phone, a tablet, a payment kiosk, a card reader, etc.) of a user **103** (e.g., retailer, seller, etc.) may be used to receive a payment from a payment device **104** of a user or customer **105** is shown. It should be understood that the principles described herein may be applied to non-mobile electronic devices (e.g., cash registers, etc.) with electronic displays, as well. The mobile device **102** may include a housing **106** having a front side **108** and a back side **110.** The housing **106** may be formed of metal and/or other material (e.g., glass, etc.) and may substantially cover a rear portion of the mobile device **102** to assist in shielding of components and supporting thermal regulation for the mobile device **102.** In some embodiments, the mobile device **102** may be at least partially enclosed in a case **112,** as understood in the art, which may protect the mobile device **102** from damage. According to the principles described herein, the payment device **104** (e.g., a near-field communication (NFC) component, a credit card, a mobile wallet, a key fob, etc.) may be positioned at least partially behind and/or in proximity to the back side **110** of the housing **106** of the mobile device **102** by a user (e.g., a customer or a payor). In the embodiment of **FIG.** 1, the payment device **104** is being positioned near an upper portion of the mobile device **102.** In other embodiments, the mobile device **102** may be configured in another manner to receive the payment device **104** in a different position at the back side of the mobile device **102.** In an embodiment, the case **112** may be configured to enable wireless payments by the payment device **104** by being thinner and/or supporting electromagnetic communications therethrough. In an alternative embodiment, the case **112** may define a region that exposes the back side **110** to enable the payment device **104** to be placed closer thereto.

As shown, the front side **108** of the mobile device **102** may include a primary electronic display **114** (e.g., a screen, a display glass, touch-sensitive screen, etc.) configured to display interactive graphical user interfaces with which a user interfaces to control operation of the mobile device **102.** One or more buttons displayed on the primary electronic display **114** may be pressed to cause or enable an NFC signal to be generated in performing payments with the payment device **104.** The primary electronic display **114** may also display information pertaining to the payment or transaction, such as point-of-sale (POS) information or status information. In an embodiment, a successful or unsuccessful payment feature may be displayed in response to a successful or unsuccessful payment attempt using the payment device **104.**

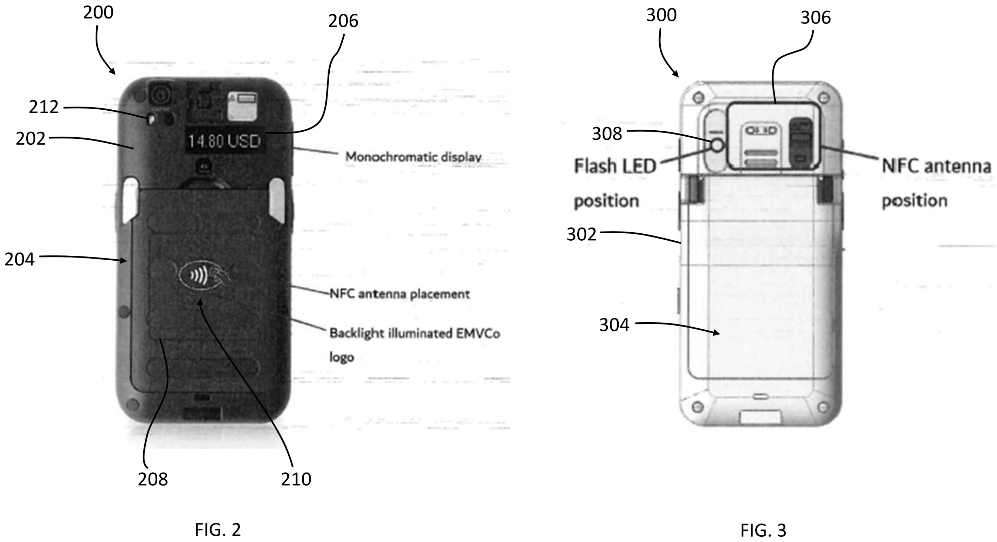

**In** **FIG. 2****,** an illustrative mobile device **200** including a housing **202** having a back side **204** and a secondary electronic display **206** positioned on the back side **204** of the housing **202** is shown. In the embodiment of **FIG. 2****,** the secondary electronic display **206** of the mobile device **200** may include electronics that define pixels configured to emit light to display visual information (e.g., text, images, videos, etc.) to the user through the secondary electronic display **206.** The secondary electronic display **206** may be a liquid crystal display (LCD), an organic light-emitting diode (OLED) display, an active-matrix organic light-emitting diode (AMOLED) display, a super AMOLED display, a dynamic AMOLED display, a thin film transistor (TFT) display, an in-plane switching (IPS) display, etc. In the embodiment of **FIG. 2****,** the secondary electronic display **206** may be a monochromatic display depicting a series of numbers and letters corresponding to an amount of a transaction (e.g., "14.80 USD"). In other embodiments, the secondary electronic display **206** may be a monochromatic display showing words, phrases, images, graphics, etc., and may also display information pertaining to the payment or transaction, such as point-of-sale (POS) information or status information. For example, a successful or unsuccessful payment feature may be displayed in response to a successful or unsuccessful payment attempt.

An illustrative antenna **208** (e.g., an antenna, etc.) is shown in **FIG. 2****.** The antenna **208** may be configured and oriented to communicate NFC signals via the back side **204** of the housing **202,** so as to electromagnetically interact with a payment device when the payment device is positioned in a proximate location of the antenna **208.** The antenna **208** may be substantially square or rectangular in shape, and may be positioned within the housing **202** (e.g., on the inside of the back side **204** of the housing **202)** and near a middle or bottom portion of the mobile device **200.** In some embodiments, the antenna **208** may have a different shape or orientation. The antenna **208** may be an antenna configured to conduct and radiate NFC signals (i.e., radiofrequency (RF) signals at NFC frequencies). The use of NFC signals enables sharing of payloads of data between an NFC-enabled payment device and the mobile device **200.** As understood in the art, NFC tags store and transmit data when positioned at a close range (i.e., electromagnetically and communicatively coupled) relative to NFC-enabled devices. The antenna **208** may communicate with at least one processor unit or other computing device(s) of the mobile device **200,** for example. In some embodiments, the orientation of the antenna **208** may correspond to a location at which a user is to position a payment device when making a payment.

As shown in **FIG. 2****,** the mobile device **200** may include a wireless payment logo **210** (e.g., an indicia) indicating to a user (customer) a location at which the antenna **208** is oriented for the customer to position the payment device. The wireless payment logo **210** may be printed or marked on the housing **202** of the mobile device **200** and may be optionally backlit or illuminated. The mobile device **200** also may include an illumination device **212.** The illumination device **212** may be a light, such as a light-emitting diode (LED) light, configured to turn ON or OFF during a payment or transaction. For example, the illumination device **212** may turn ON or flash ON and OFF in response to a customer payment process being initiated, a payment being accepted, a transaction being completed, etc. In some embodiments, the illumination device **212** may correspond to a camera and/or LED of the camera of the mobile device **200.**

In **FIG. 3****,** a rear view of an illustrative mobile device **300** inclusive of another embodiment of a secondary electronic display and NFC antenna proximate the secondary electronic display is shown. The mobile device **300** includes a housing **302** having a back side **304** and an illustrative antenna **306.** The antenna **306** may be configured and oriented to communicate NFC signals via the back side **304** of the housing **302,** and configured to electromagnetically and communicatively interact with a payment device when the payment device is positioned in a proximate location of the antenna **306.** The antenna **306** may be substantially square or rectangular in shape and may be positioned behind the housing **302** (e.g., within the housing) and at an upper portion of the mobile device **300** (e.g., near a camera of the mobile device **300,** etc.). In some embodiments, the antenna **306** may have a different shape or orientation. The antenna **306** may be an antenna configured to conduct and radiate NFC signals (i.e., RF signals at NFC frequencies), which enables sharing of payloads of data between an NFC device and a mobile device in this case. As understood in the art, NFC tags store and transmit data when positioned at a close range relative to NFC-enabled devices. The antenna **306** may communicate with a processor unit or other computing device of the mobile device **300,** for example. In some embodiments, the orientation of the antenna **306** may correspond to a location at which a user is to position a payment device during a transaction. The mobile device **300** also may include an illumination device **308.** The illumination device **308** may be a light, such as an LED light, configured to turn ON or OFF during a payment or transaction. For example, the illumination device **308** may turn ON or flash ON and OFF in response to a customer payment process being initiated, a payment being accepted, a transaction being completed, etc. In some embodiments, the illumination device **308** may correspond to a camera of the mobile device **300.** In some embodiments, the mobile device **300** may also include a secondary electronic display on the back side **304,** as further described herein.

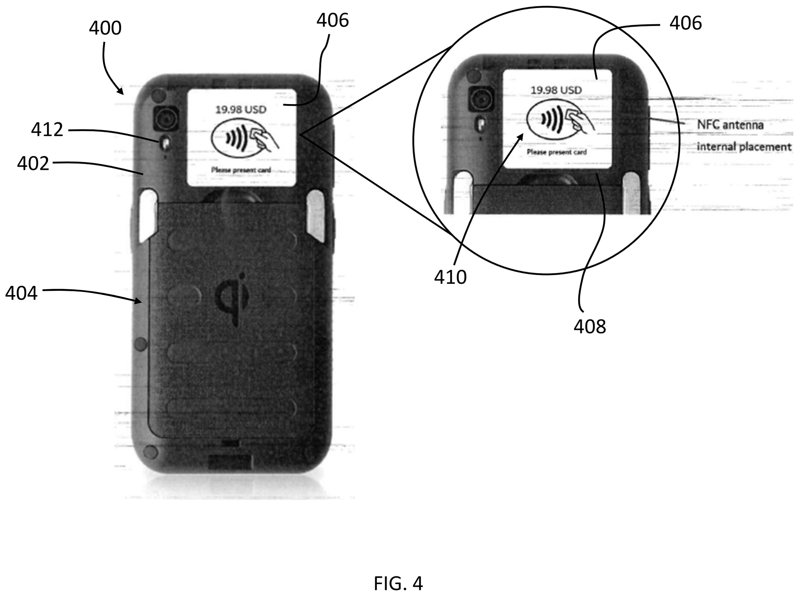

Turning now to **FIG. 4****,** an illustrative mobile device **400** inclusive of an embodiment of a secondary electronic display is shown, according to an exemplary embodiment. The mobile device **400** may include a housing **402** having a back side **404** and a secondary electronic display **406** positioned on the back side **404** of the housing **402.** In the embodiment of **FIG. 4****,** the secondary electronic display **406** of the mobile device **400** may be a color display including electronics that define pixels configured to emit light to display visual information (e.g., text, images, videos, etc.) to the user. The secondary electronic display **406** may be a liquid crystal display (LCD), an organic light-emitting diode (OLED) display, an active-matrix organic light-emitting diode (AMOLED) display, a super AMOLED display, a dynamic AMOLED display, a thin film transistor (TFT) display, an in-plane switching (IPS) display, etc. The secondary electronic display **406** may be touch-sensitive to enable user interactions. In the embodiment of **FIG. 4****,** the secondary electronic display **406** may depict a series of numbers corresponding to an amount of a transaction (e.g., "19.98 USD"), along with words, phrases (e.g., "please present card"), and/or graphics indicating payment instructions to a user. In some embodiments, the secondary electronic display **406** may display information pertaining to the payment or transaction, such as point-of-sale (POS) information or status information. For example, a successful or unsuccessful payment feature may be displayed in response to a successful or unsuccessful payment attempt.

An illustrative antenna **408** is shown in **FIG. 4****.** The antenna **408** may be configured and oriented to communicate NFC signals via the back side **404** of the housing **402,** and configured to interact with a payment device when the payment device is positioned in a proximate location of the antenna **408,** and may have the same or similar configuration as the previously described antennas. As shown in **FIG. 4****,** the antenna **408** may be oriented radially about the secondary electronic display **406.** In some embodiments, the antenna **408** may have a different shape (e.g., circular, coiled, etc.) or orientation.

As with previous embodiments, the mobile device **400** also may include an illumination device **412.** The illumination device **412** may be a light, such as an LED light, configured to turn ON or OFF during a payment or transaction. For example, the illumination device **412** may turn ON or flash ON and OFF in response to a customer payment process being initiated, a payment being accepted, a transaction being completed, etc. In some embodiments, the illumination device **412** may correspond to a camera of the mobile device **400.**

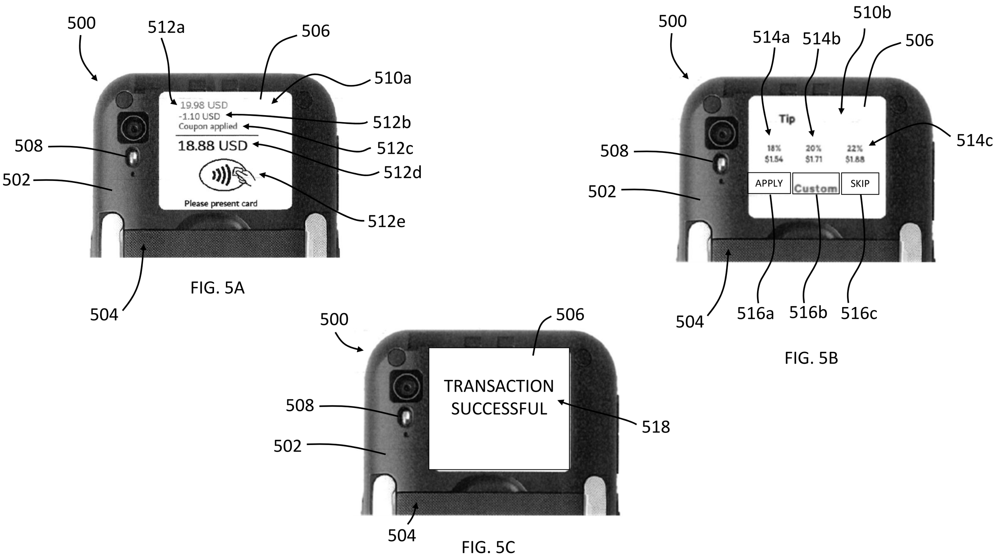

With regard to **FIGS. 5A-5C****,** additional embodiments of a mobile device **500** displaying illustrative user interfaces on a secondary electronic display in performing a transaction are shown. The mobile device **500** may include a housing **502** having a back side **504** and a secondary electronic display **506** positioned on the back side **504** of the housing **502.** In the embodiment of **FIGS. 5A** and **5B****,** the secondary electronic display **506** of the mobile device **500** may be a color display including electronics that define pixels configured to emit light to display visual information (e.g., text, images, videos, etc.) to the user through the secondary electronic display **506,** the same or similar manner as in **FIG. 4****.** The mobile device **500** also may include an illumination device **508,** and be utilized in the same or similar manner as in **FIG. 4****.**

In some embodiments, for example, as shown in **FIG. 5A****,** the secondary electronic display **506** may be configured to display a user interface **510a.** The user interface **510a** may be a graphical user interface with which a user interfaces to control operation of the mobile device **500,** during a transaction. For example, the user interface **510a** may include graphics, such as retail price **512a** (e.g., "19.98 USD"), coupon discount **512b** (e.g., "1.10 USD"), coupon message **512c** (e.g., "coupon applied"), discounted price **512d** (e.g., "18.88 USD"), and payment device indicia **512e** (collectively graphics **512).** The graphics **512** may indicate an amount of a good or service, whether any coupons have been applied, an amount of a requested payment, a location at which the antenna is oriented for the customer to position the payment device, etc. In other embodiments, the user interface **510a** may include other or additional options.

In some embodiments, for example, as shown in **FIG. 5B****,** the secondary electronic display 506 may be configured to display a tip selection user interface **510b.** The tip selection user interface **510b** may be a graphical user interface with which a user interfaces to control operation of the mobile device **500** during the transaction. For example, the tip selection user interface **510b** may include tip selection amounts **514a-514c** (collectively **514).** The tip selection amounts **514** may indicate a proposed amount for a tip, such a 18%, 20%, 22%, etc. (along with corresponding actual amounts), which the user can press to add the tip to the payment amount. The tip selection user interface **510b** may also include an "apply tip" button **516a,** a "custom tip" button **516b,** and a "skip tip" button **516c** (collectively tip option buttons **516).** The tip option buttons **516** may allow a user to select whether the user wants to apply a given tip selected on the tip selection user interface **510b,** be directed to a different display on which the user can enter a custom tip amount, or skip applying any tip to the payment amount. In other embodiments, the tip selection user interface **510b** may include other or additional options.

In some embodiments, for example, as shown in **FIG. 5C****,** the secondary electronic display **506** may be configured to display a transaction status message **518** (e.g., "TRANSACTION SUCCESSFUL"). The transaction status message **518** may be a textual or graphical representation of a status of the transaction. For example, the transaction status message **518** may depict a textual or graphical representation of messages, such as "transaction successful," "card read," "processing," "transaction denied," etc. In some embodiments, the secondary electronic display **506** may be configured to display information or options pertaining to a receipt for the user. For example, the secondary electronic display **506** may depict a textual or graphical representation of buttons or options, such as "text receipt," "email receipt," "tap for receipt," "print receipt," or otherwise. Any input or selection by a user on the secondary electronic display **506** may result in displaying different messages or options or directing the user to a different display for entering additional inputs.

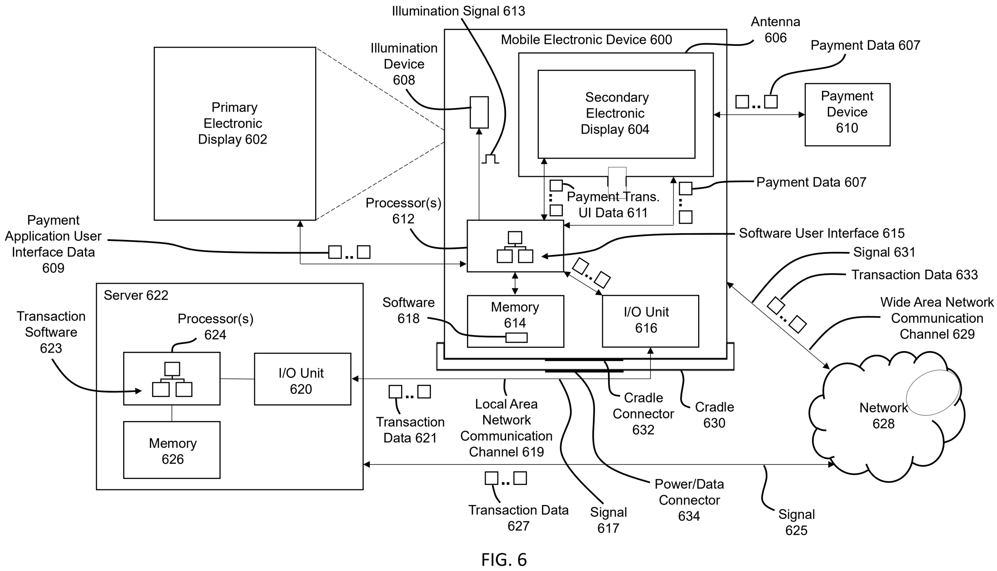

Turning now to **FIG. 6****,** a block diagram of an illustrative mobile electronic device **600** including an antenna for performing a wireless transaction with a payment device and a secondary electronic display on a back side of the mobile device is shown. The mobile electronic device **600** may include a primary electronic display **602,** a secondary electronic display **604,** an antenna **606,** and an illumination device **608** as previously described herein. Additionally, the mobile electronic device **600** may be in data communication with a payment device **610,** as previously described herein. Payment data **607** containing data relating to a transaction may be communicated between the antenna **606** and the payment device **610.** The mobile electronic device **600** may also include one or more processors **612.** The processor(s) **612** may be any type of processor(s), but may also be analog circuitry. The processor **612** may be configured to transmit a driving power signal (e.g., direct current (DC) power signal or otherwise), as well as data, such as payment application user interface data **609** and payment transaction user interface data **611** to the primary electronic display **602** and the secondary electronic display **604** to cause the primary electronic display **602** and the secondary electronic display **604** to display one or more images, graphics, user interfaces, text displays, videos, etc. The payment data **607** may also be communicated between the antenna **606** and the processor(s) **612.** The processor(s) **612** may also be in communication with the illumination device **608** and may be configured to transmit an illumination signal **613** to the illumination device **608** to cause the illumination device **608** to turn ON or OFF or flash. Additionally, the processor(s) **612** may utilize or process software or applications, such as a software user interface **615.**

The processor(s) **612** may be operably connected to a non-transitory memory **614** and I/O unit **616.** The memory **614** may contain software **618** used in performing the payment processes described herein, and may also store other software, applications, data, etc. The I/O unit **616** may be operably connected to both the processor(s) **612** of the mobile electronic device **600** and an I/O unit **620** of a server **622.** Accordingly, signals **617** generated from the processor(s) **612** may be transmitted via the I/O unit **616** of the mobile electronic device **600** to the I/O unit **620** of the server **622,** for example, over a local area network communication channel **619.** The signals **617** may communicate data, such as transaction data **621,** to the server **622,** which may be processed by processor(s) **624** of the server **622.** The processor(s) **624** may utilize or process software or applications, such as transaction software **623.** The processor(s) **624** may be operably connected to a non-transitory memory **626** which may store software, applications, data, etc.

The server **622** may be in operably connected to a network **628,** which may be, for example, a cloud-based network. The server **622** may communicate and receive signals **625** including transaction data **627** to and from the network **628.** The network **628** may also be operably connected to the mobile electronic device **600,** for example, over a wide area network communication channel **629.** The network **628** may communicate and receive signals **631** including transaction data **633** to and from the mobile electronic device **600.**

The mobile electronic device **600** may be operably connected to a cradle **630** (e.g., a docking station, an accessory, etc.). The cradle **630** may have a cradle connector **632** (e.g., an electronic component, etc.), which connects the cradle **630** to the mobile electronic device **600.** For example, the cradle connector **632** may be any type of physical or wireless connector, such as a Bluetooth connection, a cord, a connector, etc. The cradle connector **632** may provide power to the mobile electronic device **600** and may communicate signals containing data to and from the mobile electronic device **600.** For example, in some embodiments, the cradle **630** may be a docking station, which supports the mobile electronic device **600** while the mobile electronic device **600** is being used in a transaction and may position the mobile electronic device **600** in a specific orientation to facilitate better user access. In some embodiments, the cradle **630** may be a POS system that includes a display for displaying a user interface for a customer to use during a transaction. The cradle **630** may also include a power/data connector **634,** which may be wired or wireless, to supply power to the cradle **630** and/or the mobile electronic device **600** and may communicate signals containing data to and from the cradle **630.**

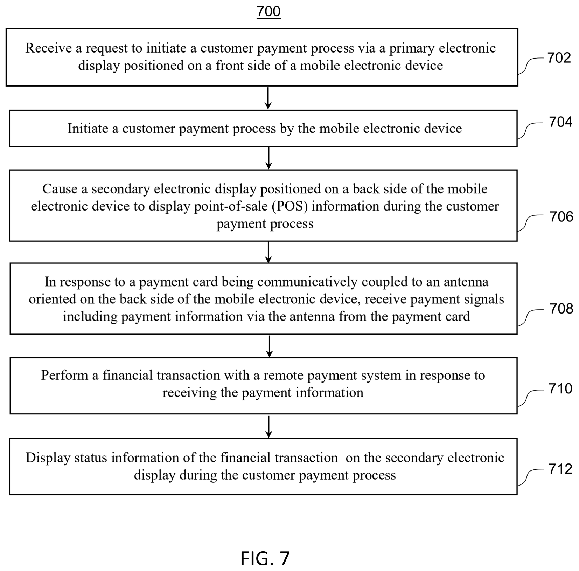

Turning now to **FIG. 7****,** a flow chart illustrates an illustrative process **700** for mobile payment processing between an NFC component (e.g., an NFC chip, the payment device, a credit card, a mobile wallet, etc.) and a mobile electronic device. At step **702,** a request to initiate a customer payment process may be received via a primary electronic display positioned on a front side of a mobile electronic device. At step **704,** a customer payment process may be initiated by the mobile electronic device. At step **706,** a secondary electronic display positioned on a back side of the mobile electronic device may be caused or commanded to display POS information during the customer payment process. The POS information may be simultaneously displayed on the primary electronic display to enable a user (e.g., retailer) to view. At step **708,** in response to a payment device being communicatively coupled to an antenna oriented on the back side of the mobile electronic device, payment signals via NFC signals or other communications protocol including payment information may be received via the antenna from the payment device. At step **710,** a financial transaction may be performed with a remote payment system in response to receiving the payment information. At step **712,** status information of the financial transaction may be displayed on the secondary electronic display during the customer payment process. In additional steps, an illumination device may be turned ON or caused to flash in response to the customer payment process being initiated. In further additional steps, one or more inputs from a customer may be received via the secondary electronic display. In yet additional steps, the customer payment process may be automatically initiated in response to communicatively coupling the mobile electronic device with an electronic component of a cradle.

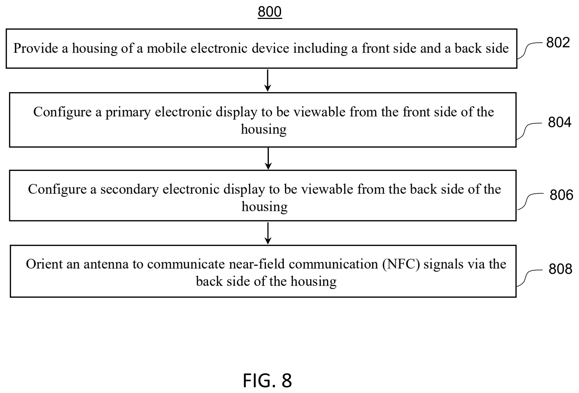

**FIG. 8** is a flow chart **800** illustrating a method of manufacturing a mobile electronic device. At step **802,** a housing of a mobile electronic device including a front side and a back side may be provided. At step **804,** a primary electronic display may be configured to be viewable from the front side of the housing. At step **806,** a secondary electronic display may be configured to be viewable from the back side of the housing. In some embodiments, configuring the secondary electronic display to be viewable from the back side of the housing may include providing a secondary electronic display that is limited to displaying monochromatic text. In some embodiments, configuring the secondary electronic display to be viewable from the back side of the housing includes providing a secondary electronic display that enables a touchscreen configured for interactivity during a customer payment process. At step **808,** an antenna may be oriented to communicate NFC or other wireless signals via the back side of the housing for performing a transaction using a payment device, such as an NFC-enabled payment card. Orienting the antenna on the back side of the housing may include orienting the antenna radially about the secondary electronic display.

### Features

One embodiment of a mobile electronic device may include a housing having a front side and a back side. A primary electronic display may be positioned on the front side of the housing and may display interactive graphical user interfaces with which a user interfaces to control operation of the mobile electronic device. The mobile electronic device may also include a secondary electronic display to display point-of-sale (POS) information to a customer to pay using a payment device that is enabled to perform near-field communication (NFC) transactions. The secondary electronic display is positioned on the back side of the housing to enable the customer to view the secondary electronic display when performing a transaction. The mobile electronic device may also include an antenna to communicate NFC signals with the payment device when performing the transaction. The antenna may be oriented to communicate the NFC signals via the back side of the housing, and may interact with the payment device when positioned in a proximate location of the antenna. At least one processor may be in communication with the primary electronic display, secondary electronic display, and antenna. The processor may cause the secondary electronic display to display the POS information in response to a customer payment process being initiated and receive payment signals including payment information via the antenna from the payment device. The processor also may perform a financial transaction with a remote payment system in response to receiving the payment information and display status information of the financial transaction on the secondary electronic display.

The mobile electronic device may be configured to be placed into a cradle for stationary use, and the at least one processor may be configured to, in response to communicative coupling of the mobile electronic device and an electronic component of the cradle, automatically initiate the customer payment process. The mobile electronic device may include an illumination device positioned on the back side of the housing, and the at least one processor may be configured to turn ON the illumination device or cause the illumination device to flash in response to the customer payment process being initiated. The back side of the housing may also include a wireless payment logo indicating to a customer a location at which the antenna is oriented for the customer to position the payment device. The antenna may be positioned radially about the secondary electronic display. The secondary electronic display may be limited to displaying monochromatic text, or may be a touchscreen configured for interactivity by a customer in performing the transaction.

One embodiment of a method of mobile payment processing may include initiating a customer payment process by a mobile electronic device in response to receiving a request to initiate a customer payment process via a primary electronic display positioned on a front side of the mobile electronic device. The method may include causing a secondary electronic display positioned on a back side of the mobile electronic device to display point-of-sale (POS) information during the customer payment process. In response to a payment device being communicatively coupled to an antenna oriented on the back side of the mobile electronic device, payment signals including payment information may be received via the antenna from the payment device. A financial transaction may be performed with a remote payment system in response to receiving the payment information and status information of the financial transaction may be displayed on the secondary electronic display during the customer payment process.

The method may include turning ON an illumination device or causing an illumination device to flash in response to the customer payment process being initiated. Additionally, one or more inputs may be received from a customer via the secondary electronic display. The method may include automatically initiating the customer payment process in response to communicatively coupling the mobile electronic device with an electronic component of a cradle.

A method of manufacturing a mobile electronic device may include providing a housing including a front side and a back side of the mobile electronic device. The method may include configuring a primary electronic display to be viewable from the front side of the housing, configuring a secondary electronic display to be viewable from the back side of the housing, and orienting an antenna to communicate near-field communication (NFC) signals via the back side of the housing.

The method may include configuring at least one processor to cause an illumination device viewable from the back side of the housing to illuminate in response to a customer payment process being initiated. Orienting an antenna on the back side of the housing may include orienting an antenna radially about the secondary electronic display. Configuring a secondary electronic display to be viewable from the back side of the housing may include providing a secondary electronic display that is limited to displaying monochromatic text or providing a secondary electronic display that enables a touchscreen configured for interactivity during a customer payment process. The method may also include providing a cradle configured to receive the mobile electronic device, wherein at least one processor is configured to, in response to communicative coupling of the mobile electronic device and an electronic component of the cradle, automatically initiate the customer payment process. Additionally, an indicia may be applied to the back side of the housing to denote a location at which the antenna is oriented to communicate with a payment device.

The illustrations included herewith are not meant to be actual views of any particular systems, device, architecture, or process, but are merely idealized representations that are employed to describe embodiments herein. Elements and features common between figures may retain the same numerical designation except that, for ease of following the description, for the most part, reference numerals begin with the number of the drawing on which the elements are introduced or most fully described. In addition, the elements illustrated in the figures are schematic in nature, and many details regarding the physical layout and construction of a memory array and/or all steps necessary to access data may not be described as they would be understood by those of ordinary skill in the art.

As used herein, the singular forms "a," "an," and "the" are intended to include the plural forms as well, unless the context clearly indicates otherwise.

As used herein, "or" includes any and all combinations of one or more of the associated listed items in both, the conjunctive and disjunctive senses. Any intended descriptions of the "exclusive-or" relationship will be specifically called out.

As used herein, the term "configured" refers to a structural arrangement such as size, shape, material composition, physical construction, logical construction (e.g., programming, operational parameter setting, etc.) or other operative arrangement of at least one structure and at least one apparatus facilitating the operation thereof in a defined way (e.g., to carry out a specific function or set of functions).

As used herein, the phrases "coupled to" or "coupled with" refer to structures fixedly or operably connected with each other, such as connected through a direct connection or through an indirect connection (e.g., via another structure or component).

The foregoing method descriptions and/or any process flow diagrams are provided merely as illustrative examples and are not intended to require or imply that the steps of the various embodiments must be performed in the order presented. As will be appreciated by one of skill in the art, the steps in the foregoing embodiments may be performed in any order. Words such as "then," "next," etc. are not intended to limit the order of the steps; these words are simply used to guide the reader through the description of the methods. Although process flow diagrams may describe the operations as a sequential process, many of the operations may be performed in parallel or concurrently. In addition, the order of the operations may be rearranged. A process may correspond to a method, a function, a procedure, a subroutine, a subprogram, etc. When a process corresponds to a function, its termination may correspond to a return of the function to the calling function or the main function.

The various illustrative logical blocks, modules, circuits, and algorithm steps described in connection with the embodiments disclosed here may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to and/or in communication with another code segment or a hardware circuit by passing and/or receiving information, data, arguments, parameters, or memory contents. Information, arguments, parameters, data, etc. may be communicated (e.g., passed, forwarded, and/or transmitted) via any suitable means including memory sharing, message passing, token passing, network transmission, etc.

When implemented in software, the functions may be stored as one or more instructions or code on a non-transitory computer-readable or processor-readable storage medium. The steps of a method or algorithm disclosed here may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used here, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The previous description is of various preferred embodiments for implementing the disclosure, and the scope of the invention should not necessarily be limited by this description. The scope of the present invention is instead defined by the claims.

## Claims

1. A mobile electronic device, comprising:
a housing including a front side and a back side;
a primary electronic display configured to display interactive graphical user interfaces with which a user controls operation of the mobile electronic device, the primary electronic display positioned on the front side of the housing;
a secondary electronic display configured to display point-of-sale (POS) information to a customer to pay using a payment device that is enabled to perform wireless transactions, the secondary electronic display positioned on the back side of the housing to enable the customer to view the secondary electronic display when performing a wireless transaction with the mobile electronic device;
an antenna configured to communicate wireless signals with the payment device when performing the wireless transaction, the antenna oriented to communicate the wireless signals via the back side of the housing, and configured to electromagnetically communicate with the payment device when positioned proximate the antenna; and
at least one processor in communication with the primary electronic display, secondary electronic display, and antenna, and configured to:
cause the secondary electronic display to display the POS information in response to a customer payment process being initiated;
receive payment signals including payment information via the antenna from the payment device;
perform a financial transaction with a remote payment system in response to receiving the payment information; and
display status information of the financial transaction on the secondary electronic display.

2. The mobile electronic device according to claim 1, further comprising an illumination device positioned on the back side of the housing, wherein the at least one processor is further configured to turn ON the illumination device in response to the customer payment process being initiated, wherein preferably the at least one processor is further configured to cause the illumination device to flash in response to the customer payment process being initiated.

3. The mobile electronic device according to claim 1 or 2, wherein the back side of the housing includes an indicia indicating to the customer a location at which the wireless signals of the antenna are oriented for the customer to position the payment device.

4. The mobile electronic device according to any one of the preceding claims, wherein the antenna is oriented radially about the secondary electronic display.

5. The mobile electronic device according to any one of the preceding claims, wherein the secondary electronic display is a touchscreen configured for interactivity by a customer in performing the transaction.

6. The mobile electronic device according to any one of the preceding claims, wherein the mobile electronic device is configured to be placed into a cradle for stationary use, and wherein the at least one processor is further configured to, in response to communicative coupling of the mobile electronic device and an electronic component of the cradle, automatically initiate the customer payment process, wherein preferably the cradle includes a power connection configured to supply power to the mobile electronic device.

7. The mobile electronic device according to any one of the preceding claims, wherein the wireless signals include near-field communication (NFC) signals.

8. The mobile electronic device according to any one of the preceding claims, wherein the payment device includes one or more of a payment card, a near-field communication (NFC) component, a mobile wallet, and a key fob.

9. The mobile electronic device according to any one of the preceding claims, wherein the at least one processor is further configured to:
cause the primary electronic display to display the POS information in response to the customer payment process being initiated; and
display the status information of the financial transaction on the primary electronic display.

10. A method of mobile payment processing, comprising:
initiating a customer payment process by a mobile electronic device in response to receiving a request to initiate a customer payment process via a primary electronic display positioned on a front side of the mobile electronic device;
causing a secondary electronic display positioned on a back side of the mobile electronic device to display point-of-sale (POS) information during the customer payment process;
in response to a payment device being communicatively coupled to an antenna oriented on the back side of the mobile electronic device, receiving payment signals including payment information via the antenna from the payment device;
performing a financial transaction with a remote payment system in response to receiving the payment information; and
displaying status information of the financial transaction on the secondary electronic display during the customer payment process.

11. The method according to claim 10, further comprising turning ON an illumination device in response to the customer payment process being initiated, or
further comprising causing an illumination device to flash in response to the customer payment process being initiated.

12. The method according to claim 10 or 11, further comprising receiving one or more inputs from a customer via the secondary electronic display.

13. The method according to any one of claims 10 to 12, further comprising automatically initiating the customer payment process in response to communicatively coupling the mobile electronic device with an electronic component of a cradle.

14. The method according to any one of claim 10 to 13, further comprising simultaneously displaying the status information of the financial transaction on the primary electronic display during the customer payment process.

15. The method according to any one of claim 10 to 13, wherein causing a secondary electronic display positioned on a back side of the mobile electronic device to display point-of-sale (POS) information during the customer payment process includes one or more of (i) causing the secondary electronic display to display monochromatic text and (ii) causing the secondary electronic display to enable a touchscreen configured for interactivity during the customer payment process.
